## Europäisches Patentamt

## European Patent Office

## Office européen des brevets

(11) Veröffentlichungsnummer : **0 072 490**
**B1**

# EUROPÄISCHE PATENTSCHRIFT

(45) Veröffentlichungstag der Patentschrift :
**12.02.86**

(21) Anmeldenummer : **82107025.7**

(22) Anmeldetag : **04.08.82**

(51) Int. Cl.⁴ : **B 62 D 25/12**, E 05 D 7/04,
E 05 D 5/02

(54) **Vorrichtung zur Befestigung einer Kraftfahrzeug-Schwenkklappe.**

(30) Priorität : **17.08.81 DE 3132315**

(43) Veröffentlichungstag der Anmeldung :
**23.02.83 Patentblatt 83/08**

(45) Bekanntmachung des Hinweises auf die Patenterteilung : **12.02.86 Patentblatt 86/07**

(84) Benannte Vertragsstaaten :
**FR GB IT SE**

(56) Entgegenhaltungen :
**DE-A- 1 430 250**
**DE-A- 2 435 588**
**DE-C- 2 840 053**
**FR-A- 2 248 188**
**US-A- 3 828 885**
**Behelfs-Katalog zur BMW 7er-Reihe**

(73) Patentinhaber : **BAYERISCHE MOTOREN WERKE**
**Aktiengesellschaft**
**Postfach 40 02 40 Petuelring 130**
**D-8000 München 40 (DE)**

(72) Erfinder : **Steinberg, Klaus**
**Birkenstrasse 17**
**D-8054 Mauern (DE)**
Erfinder : **Manigold, Robert, Dipl.-Ing.**
**Gollenbergstrasse 9**
**D-8081 Türkenfeld (DE)**
Erfinder : **Westenkirchner, Alois**
**Balanstrasse 388**
**D-8000 München 90 (DE)**
Erfinder : **Lönner, Otto**
**Kruckenburgstrasse 1/B**
**D-8000 München 70 (DE)**

(74) Vertreter : **Dexheimer, Rolf**
**Bayerische Motoren Werke Aktiengesellschaft Post-**
**fach 40 02 40 Petuelring 130 - AJ-31**
**D-8000 München 40 (DE)**

## Beschreibung

Die Erfindung betrifft eine Vorrichtung zur Befestigung einer Kraftfahrzeug-Schwenkklappe an zwei parallel im Abstand voneinander verlaufenden Scharnierarmen, die jeweils zwei in ihrer Längsrichtung im Abstand voneinander ausgebildete Durchgangslöcher aufweisen, durch welche in die Klappe einschraubbare Kopfschrauben mit ihrem Schraubenschaft hindurchsteckbar sind.

Die erfindungsgemäße Befestigungsvorrichtung ist insbesondere für Schwenkklappen an Personenkraftwagen vorgesehen, wie deren Motorhaube, eine Hecktür derselben oder vorzugsweise deren Kofferraumdeckel.

Bei bekannten Befestigungsvorrichtungen der eingangs erwähnten Art (DE-C-2 840 053) muß zur Befestigung der verhältnismäßig großen Schwenkklappe diese von zwei Monteuren derart gegen die Scharnierarme gehalten werden, daß die Durchgangslöcher in den Scharnierarmen auf die in der Schwenkklappe ausgebildeten Schraublöcher für die Kopfschrauben ausgerichtet sind, mit denen die Schwenkklappe an den Scharnierarmen verschraubt wird, und dann müssen — während des Haltens der Schwenkklappe — die Kopfschrauben mit ihren Schraubenschäften durch die Durchgangslöcher der Scharnierarme gesteckt und in das zugeordnete Schraubloch gebracht werden. Daraus ergibt sich ein verhältnismäßig hoher Montageaufwand und es besteht insbesondere bei der Werkstattmontage die Gefahr der Beschädigung der Schwenkklappe.

Es ist hierzu schon bekannt (FR-A-2 248 188), an den Scharnierarmen jeweils zwei herausgebogene Befestigungslaschen auszubilden, die in zwei entsprechende Öffnungen der Scharnierklappe eingeführt werden können. Dies soll durch eine Person möglich sein, was aber wegen des gleichzeitigen Einfädelns von zwei Befestigungslaschen je Scharnierarm ein beträchtliches Geschick erfordert. Ist die Schwenkklappe provisorisch nach dem Einführen der Befestigungslaschen gehaltert, werden die Kopfschrauben eingeschraubt und zwar in Gewindebohrungen der Befestigungslaschen. Das Einschrauben der Kopfschrauben in die Gewindebohrungen erfordert dabei nochmals eine große Geschicklichkeit. Da die Gewindelänge nur der Dicke der Befestigungslaschen entspricht, kann das Gewinde dabei, aber auch bei den später auftretenden Belastungen, beschädigt werden.

Durch die Erfindung wird die Aufgabe gelöst, eine in der eingangs erwähnten Art ausgebildete Vorrichtung zur Befestigung einer Kraftfahrzeug-Schwenkklappe derart zu gestalten, daß die Montage der Schwenkklappe weiter vereinfacht werden kann und die Gefahr von Beschädigungen der Schwenkklappe, insbesondere bei der Montage, reduziert ist.

Dadurch ist der Arbeitsvorgang ferner auch einer Automatisierung zugänglich. Außerdem ist dadurch ein Betrag zur Steigerung der Reparaturfreundlichkeit des Kraftfahrzeuges geleistet.

Gemäß der Erfindung ist in jedem Scharnierarm ein von dessen Rand ausgehender Einfädelschlitz ausgebildet, der in das eine Durchgangsloch einmündet und dessen Schlitzweite dem Durchmesser des Schraubenschaftes der Kopfschrauben im wesentlichen entspricht.

Daher kann zur Montage der Schwenkklappe in diejenigen Schraublöcher der Schwenkklappe, die den die Einführschlitze aufweisenden Durchgangslöchern in den Scharnierarmen zugeordnet sind, jeweils die zugehörige Kopfschraube bereits eingeschraubt sein, so daß die Schwenkklappe mit dem Schaft der vormontierten Kopfschrauben durch den jeweiligen Einfädelschlitz in das zugeordnete Durchgangsloch geschoben werden kann und die vormontierten Kopfschrauben im Zusammenwirken mit dem Rand der den Einfädelschlitz aufweisenden Durchgangslöcher Anschläge zur Ausrichtung der anderen Schraublöcher in der Schwenkklappe auf die anderen Durchgangslöcher bilden. Durch diese hindurch können dann mühelos die beiden restlichen Schrauben in die zugeordneten Schraublöcher eingefädelt und eingeschraubt werden, wonach die in den Durchgangslöchern, die den Einfädelschlitz auf weisen, sitzenden Schrauben festgezogen werden.

Aufgrund der Erfindung läßt sich der Montagevorgang bei der Herstellmontage des Kraftfahrzeuges einfacher automatisieren und im Zusammenhang mit Reparaturarbeiten als Einmann-Montage durchführen.

Der Einfädelschlitz verläuft vorzugsweise gerade, wenngleich auch ein anderer Verlauf, z. B. ein bogenförmiger Verlauf, zweckmäßig sein kann. Der Scharnierarmrand, von dem der Einfädelschlitz ausgeht, kann der Stirnrand am freien Ende des Scharnierarmes sein, beispielsweise wenn der Einfädelschlitz dem am freien Ende des Scharnierarmes angeordneten Durchgangsloch zugeordnet ist. Insbesondere in diesem Fall kann der Einfädelschlitz parallel zur Längsrichtung des Scharnierarmes oder in kleinem Winkel zu der Längsrichtung des Scharnierarmes angestellt verlaufen.

In der gegenwärtig bevorzugten Lösung jedoch geht der Einfädelschlitz von dem einen Seitenrand des Scharnierarmes aus und verläuft schräg zu dessen Längsrichtung. Mit Vorteil bildet hierbei von den beiden Schlitzrändern der bezüglich der Verbindungslinie der Mittelpunkte der Durchgangslöcher des Scharnierarmes außen liegende Schlitzrand mit seinem freien Ende eine vorstehende Fangnase, gegen welche beim Ansetzen der Schwenkklappe an die Scharnierarme die entsprechende vormontierte Schraube mit ihrem Schaft anläuft, so daß sie auf die Mündung des Einfädelschlitzes ausgerichtet wird und in diesen einlaufen kann.

Wenn die Einfädelschlitze sich schräg zur Längsrichtung der Scharnierarme erstrecken, können sie derart ausgerichtet verlaufen, daß ihre Mündung am Rand der Scharnierarme von den Durchgangslöchern ohne Einfädelschlitz wegweist. Vorgezogen wird es gegenwärtig jedoch, daß der von dem einen Seitenrand des Scharnierarmes ausgehende Einfädelschlitz derart ausgerichtet verläuft, daß das eine Durchgangsloch, an welchem der Einfädelschlitz ausgebildet ist, einen größeren Abstand von dem anderen Durchgangsloch aufweist als die Mündung des Einfädelschlitzes am Seitenrand des Scharnierarmes. Der spitze Winkel, den die Einfädelschlitze hierbei mit der Längsrichtung der Scharnierarme einschließen, liegt vorzugsweise im Bereich von 25 bis 30°. Wenngleich es außerdem möglich ist, die Einfädelschlitze an den an den freien Enden der Scharnierarme liegenden Durchgangslöchern auszubilden, wird es gegenwärtig vorgezogen, sie an den von dem freien Ende der Scharnierarme weiter weg liegenden Durchgangslöchern auszubilden. Es besteht auch die Möglichkeit, den Einfädelschlitz an dem einen Scharnierarm an dem vorn an dessen freien Ende angeordneten Durchgangsloch auszubilden, während der Einfädelschlitz an dem anderen Scharnierarm an dem hinteren Durchgangsloch ausgebildet ist. Bevorzugt jedoch sind die Einfädelschlitze an den in Längsrichtung der Scharnierarme auf gleicher Höhe miteinander liegenden Durchgangslöchern der Scharnierarme ausgebildet.

Ferner können die Einfädelschlitze in den beiden Scharnierarmen parallel zueinander ausgerichtet sein, so daß sie beispielsweise beide am linken oder rechten Seitenrand der Scharnierarme münden. Bevorzugt jedoch sind die Einfädelschlitze an den beiden Scharnierarmen spiegelbildlich zueinander und an den einander zugewendeten Seitenrändern der Scharnierarme ausgebildet.

Die Erfindung ist nicht beschränkt auf Schwenkklappen, die mit jedem der beiden Scharnierarme mittels nur zweier Schrauben verschraubt wird. Es können vielmehr auch mehr als zwei Schrauben für jeden Scharnierarm vorgesehen werden, wobei es möglich ist, an jedem Scharnierarm nur eines der den Schrauben zugeordneten Durchgangslöcher mit einem Einfädelschlitz zu versehen.

Die Erfindung wird anhand einer Ausführungsform erläutert, die aus der Zeichnung ersichtlich ist. In der Zeichnung zeigt :

Figur 1 eine als Kofferraumdeckel eines Personenkraftfahrzeuges dienende, mit zwei Scharnierarmen desselben verschraubte Schwenkklappe in der Ansicht von unten und

Figur 2 den vorderen Teil eines der Scharnierarme aus Fig. 1 in perspektivischer Darstellung.

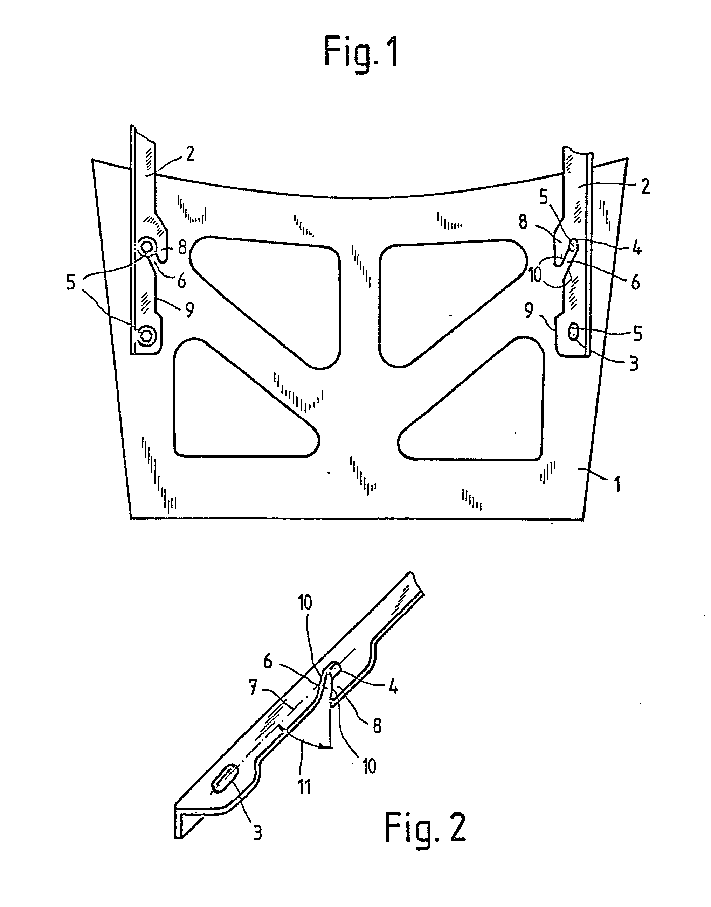

Die in Fig. 1 in der Ansicht von unten gezeigte Schwenkklappe 1 wird mit zwei parallel im Abstand voneinander verlaufenden Scharnierarmen 2 mittels jeweils zweier Kopfschrauben 5 verschraubt. Hierzu sind in der Schwenkklappe 1 an entsprechender Stelle angeordnete Schraublöcher ausgebildet, während jeder Scharnierarm 2 zwei in seiner Längsrichtung im Abstand voneinander ausgebildete Durchgangslöcher 3, 4 aufweist, die vorzugsweise jeweils als Langloch ausgebildet sind.

Wie aus den Fig. 1 und 2 ersichtlich, ist jeweils an den hinten liegenden Durchgangslöchern 4 der Scharnierarme 2 ein in spitzem Winkel 11 zu der Verbindungslinie 7 der Mittelpunkte der beiden Durchgangslöcher 3, 4 ausgerichtet verlaufender Einfädelschlitz 6 vorhanden, der von dem einen Seitenrand 9 der Scharnierarme ausgeht und in das Durchgangsloch 4 einmündet. Die Einfädelschlitze 6 an den Scharnierarmen 2 verlaufen spiegelbildlich zueinander und sind mit ihrer Schlitzmündung an dem Seitenrand 9 den an den freien Enden der Scharnierarme 2 angeordneten Durchgangslöchern 3 zugewendet. Ihr von der Verbindungslinie 7 der Durchgangslöcher 3, 4 weiter entfernt liegender Schlitzrand 10 bildet mit seinem freien Ende eine an dem Seitenrand 9 der Scharnierarme 2 vorstehende Fangnase 8.

Zur Montage der Schwenkklappe 1 werden in diejenigen beiden ihrer Schraublöcher, denen die den Einfädelschlitz 6 aufweisenden Durchgangslöcher 4 zugeordnet sind, die Kopfschrauben 5 soweit eingeschraubt, daß die Unterseite ihres Kopfes um mehr als die Dicke der Scharnierarme 2 von der Unterseite der Schwenkklappe 1 entfernt angeordnet ist. Die Schwenkklappe 1 kann dann mit den vormontierten Kopfschrauben 5 nach federnder Auslenkung der Scharnierarme 2 zwischen dieselbe vor die Fangnasen 8 an den Einfädelschlitzen 9 gesetzt und dann gegen die Fangnasen 8 geschoben werden, so daß sie in den zugeordneten Einfädelschlitz 6 beim Zurückfedern der Scharnierarme 2 einlaufen. Es ist auch möglich, zunächst nur die eine vormontierte Kopfschraube 5 durch den Einfädelschlitz 6 an dem einen Scharnierarm hindurch in das zugeordnete Durchgangsloch 4 zu schieben, bis sie am hinteren Rand dieses Durchgangslochs 4 anschlägt, und dann die Schwenkklappe 1 um diese Kopfschraube zu verschwenken, so daß die andere vormontierte Kopfschraube 5 durch den Einfädelschlitz 6 im anderen Scharnierarm 2 in ihr zugeordnetes Durchgangsloch 4 eingeschwenkt wird.

Die vormontierten Kopfschrauben 5 bilden dann im Zusammenwirken mit dem hinteren Rand der Durchgangslöcher 4 Anschläge, durch welche die Schwenkklappe 1 in einer Lage gehalten ist, in der die anderen Durchgangslöcher 3 auf die ihnen zugeordneten Schraublöcher in der Schwenkklappe 1 ausgerichtet sind, so daß dort die anderen Kopfschrauben 5 leicht in ihr Schraubloch eingefädelt und festgezogen werden können. Um den Montagevorgang zu beenden, brauchen dann nur noch die beiden vormontierten Kopfschrauben 5 festgezogen zu werden.

**Patentansprüche**

1. Vorrichtung zur Befestigung einer Kraftfahrzeug-Schwenkklappe (1) an zwei parallel im Abstand voneinander verlaufenden Scharnierarmen (2), die jeweils zwei in ihrer Längsrichtung im Abstand voneinander ausgebildete Durchgangslöcher (3, 4) aufweisen, durch welche in die Schwenkklappe (1) einschraubbare Kopfschrauben (5) mit ihrem Schraubenschaft hindurchsteckbar sind, dadurch gekennzeichnet, daß in jedem Scharnierarm (2) ein von dessen Rad ausgehender Einfädelschlitz (6) ausgebildet ist, der in ein Durchgangsloch (4) einmündet und dessen Schlitzweite im wesentlichen dem Durchmesser des Schraubenschaftes der Kopfschrauben (5) entspricht.

2. Vorrichtung nach Anspruch 1, dadurch gekennzeichnet, daß der Einfädelschlitz von einem Seitenrand (9) des Scharnierarmes (2) ausgeht und schräg zur Längsrichtung des Scharnierarmes (2) verläuft.

3. Vorrichtung nach Anspruch 2, dadurch gekennzeichnet, daß von den beiden Schlitzrändern (10) der bezüglich der Verbindungslinie (7) der Mittelpunkte der Durchgangslöcher (3, 4) des Scharnierarmes (2) außen liegende Schlitzrand mit seinem freien Ende eine vorstehende Fangnase (8) bildet.

4. Vorrichtung nach Anspruch 2 oder 3, dadurch gekennzeichnet, daß der Einfädelschlitz (6) derart ausgerichtet verläuft, daß das eine Durchgangsloch (4), an welchem der Einfädelschlitz (6) ausgebildet ist, einen größeren Abstand von dem anderen Durchgangsloch (3) aufweist, als die Mündung des Einfädelschlitzes (6) am Seitenrand (9) des Scharnierarmes (2).

5. Vorrichtung nach einem der Ansprüche 2 bis 4, dadurch gekennzeichnet, daß die Schlitzränder (10) des Einfädelschlitzes (6) in einem spitzen Winkel (11) im Bereich von 25 bis 30° zu der Längsrichtung des Scharnierarmes (2) verlaufen.

6. Vorrichtung nach einem der Ansprüche 2 bis 5, dadurch gekennzeichnet, daß der Einfädelschlitz (6) an demjenigen Durchgangsloch (4) ausgebildet ist, dessen Abstand von dem freien Ende des Scharnierarmes (2) größer als der des anderen Durchgangsloches (3) ist.

7. Vorrichtung nach einem der Ansprüche 1 bis 6, dadurch gekennzeichnet, daß die Einfädelschlitze (6) an den in Längsrichtung der Scharnierarme (2) auf gleicher Höhe miteinander liegenden Durchgangslöchern (4) der Scharnierarme (2) ausgebildet sind.

8. Vorrichtung nach einem der Ansprüche 2 bis 7, dadurch gekennzeichnet, daß die Einfädelschlitze (6) an den beiden Scharnierarmen (2) spiegelbildlich zueinander und an den einander zugewendeten Seitenrändern (9) der Scharnierarme (2) ausgebildet sind.

## Claims

1. A device for securing a pivotable flap (1) of a motor vehicle to two hinge arms (2) extending parallel to and spaced apart from each other, each of the arms comprising spaced-apart through-holes (3, 4) formed in the longitudinal direction of the arms, through which holes the screw shank part of headed screws (5) which are screwable into the pivotable flap (1) can be pushed, characterised in that, in each hinge arm (2), there is formed a thread-in slot (6) starting from its edge, which slot opens into one through-hole (4) and the slot width of which corresponds substantially to the diameter of the screw shank of the headed screws (5).

2. A device according to Claim 1, characterised in that the thread-in slot starts from a lateral edge (9) of the hinge arm (2) and extends obliquely with respect to the longitudinal direction of the hinge arm (2).

3. A device according to Claim 2, characterised in that, of the two slot edges (10), the slot edge lying outwards in relation to the line (7) of connection of the centre points of the through-holes (3, 4) of the hinge arm (2) forms a protruding catching nose (8) with its free end.

4. A device according to Claim 2 or 3, characterised in that the thread-in slot (6) extends in such an orientation that the one through-hole (4) on which the thread-in slot (6) is formed is at a greater distance from the other through-hole (3) than the mouth of the thread-in slot (6) on the side edge (9) of the hinge arm (2).

5. A device according to one of Claims 2 to 4, characterised in that the slot edges (10) of the thread-in slot (6) extend at an acute angle (11) in the range of 25 to 30° in relation to the longitudinal direction of the hinge arm (2).

6. A device according to one of Claims 2 to 5, characterised in that the thread-in slot (6) is formed on that through-hole (4) whose distance from the free end of the hinge arm (2) is greater than that of the other through-holes (3).

7. A device according to one of Claims 1 to 6, characterised in that the thread-in slots (6) are formed on the through-holes (4) of the hinge arms (2) which lie on the same level with one another in the longitudinal direction of the hinge arms (2).

8. A device according to one of Claims 2 to 7, characterised in that the thread-in slots (6) on the two hinge arms (2) are made in mirror image to one another and on the lateral edges (9) facing one another of the hinge arms (2).

## Revendications

1. Dispositif pour la fixation d'un couvercle articulé (1) de véhicule automobile sur deux bras d'articulation (2) s'étendant parallèlement à une certaine distance l'un de l'autre, et qui comportent chacun, dans leur sens longitudinal, des trous traversants (3, 4) ménagés à une certaine distance l'un de l'autre, à travers lesquels peuvent être enfilés les fûts de vis à tête (5) susceptibles d'être vissés dans le couvercle articulé (1), dispositif caractérisé en ce qu'il est prévu, sur chacun des bras d'articulation (2) une fente d'insertion (6) partant du bord de ce bras et qui débouche dans une boutonnière (4), la largeur de cette fente correspondant en pratique au diamètre du fût de la vis à tête (5).

2. Dispositif selon la revendication 1, caractérisé en ce que la fente d'insertion part de l'un (9) des côtés latéraux du bras d'articulation (2) et s'étend obliquement par rapport à la direction longitudinale de ce bras d'articulation (2).

3. Dispositif selon la revendication 2, caractérisé en ce que celui des deux bords (10) de la fente qui est fixé à l'extérieur par rapport à la droite de jonction (7) des centres des trous traversants (3, 4) du bras d'articulation (2) constitue, par son extrémité libre, un bec de prise en saillie (8).

4. Dispositif selon la revendication 2 ou 3, caractérisé en ce que la fente d'insertion (6) est orientée de façon que celui (4) des trous traversants sur lequel est ménagée la fente d'insertion (6) est à une distance plus grande de l'autre trou traversant (3) que l'embouchure de la fente d'insertion (6) sur le bord latéral (9) du bras d'articulation (2).

5. Dispositif selon l'une des revendications 2 à 4, caractérisé en ce que les bords (10) de la fente d'insertion (6) font un angle aigu (11), de l'ordre de 25 à 30°, avec la direction longitudinale du bras d'articulation (2).

6. Dispositif selon l'une des revendications 2 à 5, caractérisé en ce que la fente d'insertion (6) est ménagée sur celui (4) des trous traversants dont la distance de l'extrémité libre du bras d'articulation (2) est plus grande que celle de l'autre trou traversant (3).

7. Dispositif selon l'une des revendications 1 à 6, caractérisé en ce que les fentes d'insertion (6) sont ménagées sur les trous traversants (4) des bras d'articulation (2) situés tous les deux au même niveau en direction longitudinale des bras d'articulation (2).

8. Dispositif selon l'une des revendications 2 à 7, caractérisé en ce que les fentes d'insertion (6) sur les deux bras d'articulation (2) sont symétriques l'une de l'autre par rapport à un plan et sont ménagées sur les bords latéraux (9) en regard l'un de l'autre de ces bras d'articulation (2).

# Fig.1

# Fig. 2